# EUROPEAN PATENT APPLICATION

(11) **EP 4 302 918 A1**
(43) Date of publication of application: **10.01.2024**
(21) Application number: 23183726.1
(22) Date of filing: 05.07.2023
(51) Int. Cl.: B23K 26/08, B23K 10/00, B23K 7/00, B23K 37/02, B23K 37/04, B23K 37/047, B23K 26/38

(54) **3D-CUTTER AND A METHOD OF CONTROLLING THE 3D-CUTTER**

(30) Priority: 05.07.2022 NL 2032376
(71) Applicant: Voortman Steel Machinery Holding B.V., 7463 PK Rijssen (NL)
(72) Inventor: SCHREUR, Joey Jacobus, 7463 PK Rijssen (NL)
(74) Representative: V.O.

(57) **Abstract**

A 3D-cutter and a method for controlling a 3D-cutter are disclosed. The 3D-cutter comprises a tiltable torch which is able to produce a cutting beam and a conveyor having a conveyor support surface with gap extending in Y-direction. The tiltable torch is moveable in both X-direction and Y-direction as well as Z-direction. Conventionally, the X-position of the entrance point or exit point of the beam in the sheet blank is kept constant relative to the gap, namely centrally between the upstream and the downstream gap edges and the sheet blank is moved back and forth in X-direction by the conveyor to form 3-dimensionally shaped bevel cuts. According to the invention, the X-position of the entrance point or exit point of the beam in the sheet blank may be varied relative to the gap, in particular relative to a downstream gap edge bounding the gap. Thus, smaller workpieces may be produced.

## Description

### FIELD

The invention relates to 3D-cutter e.g. embodied as a 3D-plasma, 3D-autogeen, or 3D-laser cutter, as well as to a method for controlling such a 3D-cutter during cutting of a workpiece.

### BACKGROUND

An example of 3D-cutter is sold by applicant as Voortman V325. The following YouTube-clip, especially as from 2:35 is very instructive: https://www.youtube.com/watch?v=8qg3qn9OPrM.

Another example of a 3D-cutter is sold by Ficep Spa as Tipo G. The following YouTube-clip, especially as from 1:18 is very instructive as well_{:} https_{:}//www_{.}voutube_{.}com/watch?v=aktzZDBm2jw&t=78s.

Yet another example of a 3D-cutter is sold by Peddinghaus under the type name HSFDB-C. The suspension of the 3D-cutter is very similar to that of the Ficep Tipo G. The following YouTube-clip shows the Peddinghaus HSFDB-C 3D-cutter: https://youtu.be/0jvMZTgH4Qk?t=113.

The 3D-cutter according to the pre-characterizing portion of claim 8 and as described in the pre-characterizing portion of the method of claim 1, as well as both 3D-cutters mentioned above comprise a conveyor defining a support surface having an upstream end from which a metal sheet blank out of which a workpiece is to be cut is supplied and a downstream end towards which the cut workpiece is discharged. The conveyor is configured to transport the blank back and forth along a horizontal X-direction of an orthogonal X-, Y-, Z-coordinate system of which the Y-direction is a horizontal direction extending perpendicular to the X-direction and wherein the Z-direction is the vertical direction. The conveyor may, for example, include a roller conveyor and a truck with a gripper which engages the metal sheet blank and moves the metal sheet blank back and forth along the horizontal X-direction over the roller conveyor. The support surface comprises an upstream support surface part, a downstream support surface part and a gap separating the upstream support surface part from the downstream support surface part. The gap extends in the Y-direction over the entire width of the support surface. The gap is bounded on an upstream side by an upstream gap edge and is bounded on a downstream side by a downstream gap edge. The gap has a width which is defined by the distance between the upstream gap edge and the downstream gap edge. The gap defines a gap axis which extends parallel to and is centrally positioned between the upstream gap edge and the downstream gap edge.

The Voortman V325 comprises a torch having a torch tip. The torch is connected to a main frame via an X-guide extending in the X-direction, a Y-guide extending in the Y-direction and a Z-guide extending in a Z-direction so as to be movable in the X-direction, the Y-direction and Z-direction relative to the gap in the support surface of the conveyor.

The 3D-cutter according to the pre-characterizing portion of claim 8 and as described in the pre-characterizing portion of the method of claim 1, as well as both 3D-cutters mentioned above comprise a torch which tiltable in variable tilt directions and with variable tilt angles relative to a horizontal XY-plane so as to be able to produce 3-dimensionally shaped beveled cuts. The torch is configured to produce a cutting beam, e.g. a plasma cutting beam, an autogenic cutting beam or a laser cutting beam. The cutting beam defines a beam direction and creates an entrance point on a top surface of the blank and an exit point on a bottom surface of the blank.

Finally, the 3D-cutter of the pre-characterizing portions of claim 8 and as described in the pre-characterizing portion of the method of claim 1 comprises an electronic controller configured for controlling the linear movements of the torch in X-, Y-, and Z-directions as well as the tilt movements of the torch. The electronic controller is additionally configured for controlling the conveyor to vary the position of the blank back and forth along the X-direction relative to the gap. Controlling the conveyor may, e.g. comprise controlling the position of a gripper truck along the horizontal X-direction while holding the metal sheet blank. Alternatively, controlling the conveyor could comprise controlling driveable rollers of the roller conveyor.

The Voortman V325 is in accordance with the pre-characterizing portion of claim 8 and when the known Voortman V325 is used, the method of pre-characterizing portion of claim 1 is applied. In the Voortman V325, the torch is tiltable by being rotatably mounted around a torch-X-axis which extends parallel to the X-direction and which is offset from the torch tip and by being rotatably mounted around a torch-Y-axis which extends parallel to the Y-direction and which is offset relative to the torch tip.

The Ficep Tipo G and the Peddinghaus HSFDB-C have a different type of torch movement in that it is only movably connected to a main frame via a Y-guide extending in the Y-direction and a Z-guide extending in a Z-direction so as to be movable in the Y-direction and Z-direction relative to the gap in the support surface of the conveyor. In other words, the X-guide is missing. The tilt movement to produce 3-dimensionally shaped beveled cuts is also arranged differently, i.e. not by rotation around a torch-X-axis and a torch-Y-axis. Instead, the Ficep torch is tiltable by being rotatably mounted around a torch-Z-axis which extends parallel to the Z-direction and by being rotatably mounted around a horizontal torch-H-axis which is offset relative to the torch-Z-axis and co-rotates with rotation of the torch around the torch-Z-axis. In other words, the torch-H-axis crosses the torch-Z-axis but does not intersect the torch-Z-axis. The Ficep torch suspension, of which an example is described in WO2013/041404, is such that the X-, Y-, Z-position of the focal point of the beam remains at the same position relative to the fixed frame of the 3D-cutter when the tilt direction and tilt angle of the torch are varied by rotation of the torch around the torch-Z-axis and torch-H-axis. In view of the above, the Ficep torch and the Peddinghaus torch each produce a beam of which the focal point is fixed in the X-direction and is always centrally arranged in X-direction above the gap in the support surface, i.e. is always in a vertical plane extending through the gap axis defined above.

The electronic controller of the known Voortman V325 is configured such that the exit point of the beam on the bottom surface of the blank is always centrally arranged in X-direction relative to the gap in the support surface, i.e. is always in a vertical plane extending through the gap axis defined above.

US 10,232,467 B2 relates to a machine for separative machining of plate-shaped workpieces. Here there torch is not tiltable and the focal point of the torch is always in the middle of the gap. The gap width can be reduced and the gap can move along in the X-direction with the torch.

### SUMMARY

The shortest size of the workpieces in X-direction is, in fact, determined by the gap width in the support surface. The gap width is determined by the variation of the position of the exit point of the beam at the bottom side of the blank. As described above, for the Voortman 325 this exit point is kept fixed in X-direction, namely in the vertical plane extending through the gap axis. For the Ficep Tipo G the X-position of the focal point of the beam is kept constant. Generally, the focal point of the beam is positioned on the top of the blank and not at the exit point of the beam, i.e. at the bottom of the blank. Thus, the X-position of the exit point may vary with the tilt of the torch in combination with the thickness of the blank because the X-position of the focal point of the beam is kept constant and the focal point is generally not at the same vertical level as the exit point of the beam but on the top of the blank. In any case, when the beam produced by the Ficep Tipo G is directed vertically, i.e. perpendicular to the blank, the exit point of the beam coincides with the vertical plane in which the gap axis extends. In other words, the beam is centrally located in the X-direction between the upstream gap edge and the downstream gap edge.

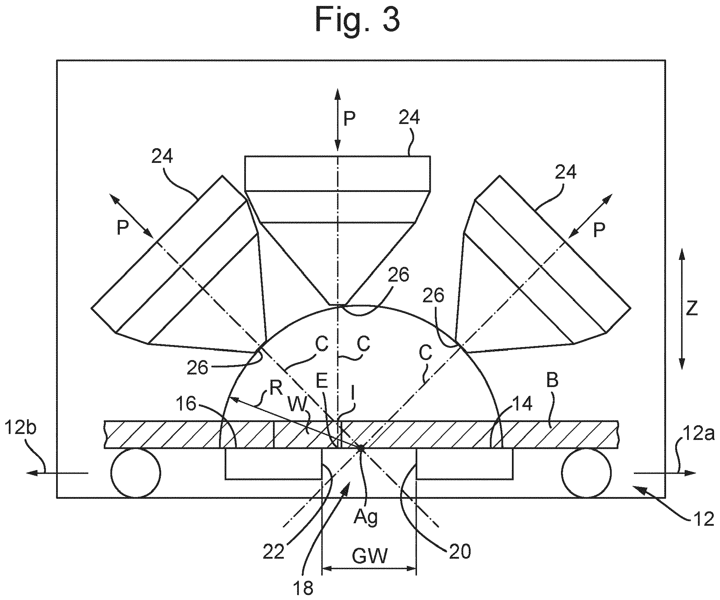

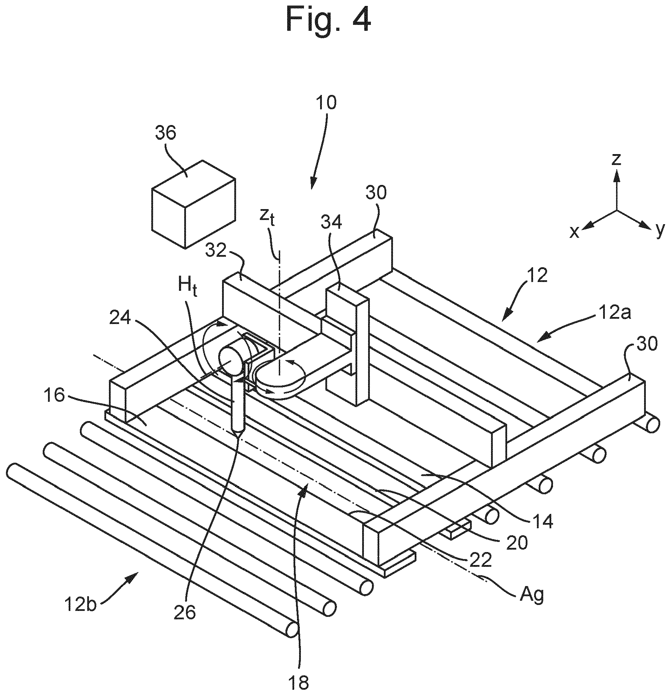

When the beam would only be directed vertically, the distance between the exit point and a gap edge may for example be 20 mm resulting in a gap width of 40 mm (see Fig. 3). Normally, the gap is bounded by two copper strips having a certain thickness in Z-direction. Thus, when torch is tilted to produce a beveled cut, due to this strip thickness the distance in X-direction between the copper strips and the exit point should be larger. See in this respect Fig. 4. Consequently, in the prior art, the gap width is determined by the thickness of the strips and the maximum bevel angle as well as the power of the beam. In practice this had led to a gap width of 80 mm. As a result, the shortest size of a workpiece in X-direction must be at least 80 mm because otherwise the point of gravity of a workpiece to be separated from the blank would be above the gap and the workpiece, when being separated from the blank by cutting, would fall in the gap.

It is an object of the invention to provide a method for controlling a 3D-cutter as well as 3D-cutter with which workpieces with a reduced minimum dimension in X-direction may be cut.

To that end, the method according to the pre-characterizing portion of claim 1 is according to the invention characterized in that for at least one cut operation, including at least a final cut operation which separates the workpiece from the blank so as to form the workpiece, the X-position of the torch along the X-guide is controlled for varying the X-position of entrance point or exit point relative to the gap, in particular to vary the distance of the position of entrance point or exit point relative to the downstream gap edge.

The 3D-cutter according to the pre-characterizing portion of claim 8 is according to the invention characterized in that the electronic controller is configured to, for at least one cut operation, including at least a final cut operation which separates the workpiece from the blank so as to form the workpiece, control the X-position of the torch along the X-guide for varying the X-position of entrance point or exit point relative to the gap, in particular to vary the distance of the position of entrance point or exit point relative to the downstream gap edge.

By varying the X-position of the torch along the X-guide for varying the X-position of the entrance point or exit point relative to the gap, in particular to vary the distance of the position of the entrance point or exit point relative to the downstream gap edge, it is possible to position the exit point as close as possible to the downstream gap edge without damaging the part which defines the downstream gap edge. By doing that, at least during the final cut operation, the workpiece can be positioned as far as possible downstream so that the center point of gravity of the workpiece is indeed on the downstream support surface part and not above the gap. Consequently, the length of the workpieces which can be produced with the 3D-cutter can be reduced relative to the known 3D-cutters having the same torch cutting power and wherein the entrance point or exit point of the cutting beam is kept at a fixed X-position relative to the gap, namely in a vertical plane in which the gap axis extends.

Additionally, by controlling and with that varying the X-position of the torch along the X-guide relative to the gap, in particular relative to the downstream gap edge, the gap width which is required for producing beveled cuts may even be reduced relative to the known 3D-cutters described above.

In summary, smaller work pieces may be produced while keeping the same gap width, and/or the gap width may be reduced which also has the result that smaller workpieces W may be separated from the blank without falling in the gap.

Embodiments will be further elucidated in the detailed description with reference to non-limiting examples shown in the following figures.

### BRIEF DESCRIPTION OF THE FIGURES

Fig. 1 shows a schematic perspective view of an example of a 3D-cutter;
Fig. 2 shows a side view of the torch tip of a known 3D-cutter in a vertical position and two tilt positions in which X-position of the exit point E of the beam is kept constant relative to the gap, namely in the middle of the gap;
Fig. 3 shows a side view of a torch tip of an embodiment of the 3D-cutter in two tilt positions and a vertical position and in which the X-position of the exit point E of the beam is controlled so as to vary the position relative to the gap, in particular controlled to reduce the distance between the exit point and the downstream gap edge when desired; and
Fig. 4 shows a schematic perspective view of another example of a 3D-cutter.

### DETAILED DESCRIPTION

In this application similar or corresponding features are denoted by similar or corresponding reference signs. The description of the various embodiments is not limited to the example shown in the figures and the reference numbers used in the detailed description and the claims are not intended to limit the description of the embodiments, but are included to elucidate the embodiments by referring to the example shown in the figures.

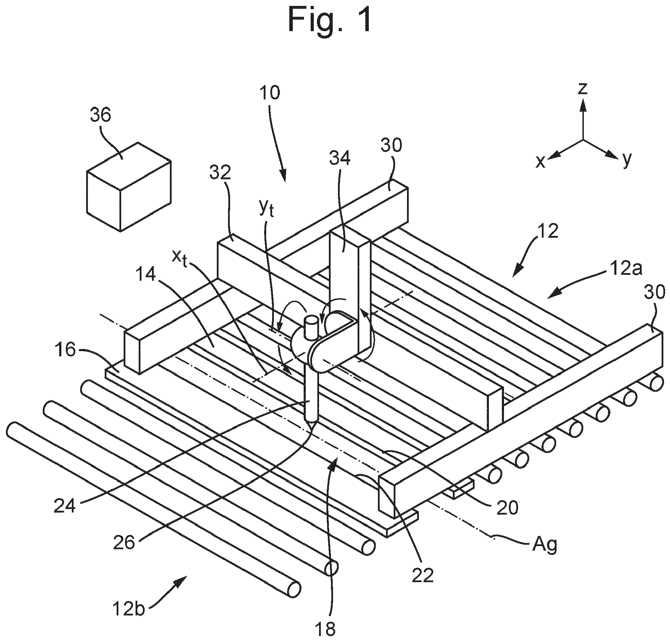

In most general terms, the invention provides a 3D-cutter 10 embodied as a 3D-plasma, 3D-autogeen, or 3D-laser cutter, the 3D-cutter 10. An example of the 3D-cutter is shown in the examples of Fig. 1. Another example is shown in Fig. 4. The 3D-cutter comprises a conveyor 12 defining a support surface 14, 16 having an upstream end 12a from which a metal sheet blank B out of which the workpiece W is to be cut is supplied and a downstream end 12b towards which the cut workpiece W is discharged. The conveyor 12 is configured to transport the blank B back and forth along a horizontal X-direction of an orthogonal X-, Y-, Z-coordinate system of which the Y-direction is a horizontal direction extending perpendicular to the X-direction and wherein the Z-direction is the vertical direction. The support surface 14, 16 comprises an upstream support surface part 14, a downstream support surface part 16 and a gap 18 separating the upstream support surface part 14 from the downstream support surface part 16. The gap 18 extends in the Y-direction over the entire width of the support surface 14, 16. The gap 18 is bounded on an upstream side by an upstream gap edge 20 and is bounded on a downstream side by a downstream gap edge 22. The gap 18 has a width GW which is defined by the distance between the upstream gap edge 20 and the downstream gap edge 22. The gap 18 defines a gap axis Ag which extends parallel to and is centrally positioned between the upstream gap edge 20 and the downstream gap edge 22.

The 3D cutter additionally comprises a torch 24 having a torch tip 26 and being connected to a main frame 28 via an X-guide 30 extending in the X-direction, a Y-guide 32 extending in the Y-direction and a Z-guide 34 extending in a Z-direction so as to be movable in the X-direction, the Y-direction and Z-direction relative to the gap 18 in the support surface 14, 16 of the conveyor 12. The torch 24 is tiltable in variable tilt directions and with variable tilt angles relative to a horizontal XY-plane so as to be able to produce 3-dimensionally shaped beveled cuts. The torch 24 is configured to produce a cutting beam C, e.g. a plasma cutting beam, an autogenic cutting beam or a laser cutting beam. The cutting beam defines a beam direction and creates an entrance point I on a top surface of the blank B and an exit point E on a bottom surface of the blank B.

The 3D-cutter further comprises an electronic controller 36 configured for controlling the linear movements of the torch 24 in X-, Y-, and Z-directions as well as the tilt movements of the torch 24. The electronic controller 36 is additionally configured for controlling the conveyor 12 to vary the position of the blank B back and forth along the X-direction relative to the gap 18.

According to the invention, the electronic controller 36 is configured to, for at least one cut operation, including at least a final cut operation which separates the workpiece W from the blank B so as to form the workpiece W, control the X-position of the torch 24 along the X-guide for varying the X-position of entrance point I or exit point E relative to the gap 18, in particular to vary the distance of the position of entrance point I or exit point E relative to the downstream gap edge 22.

The invention also provides a method for controlling the above described 3D-cutter. To that end, the method is characterized in that for at least one cut operation, including at least a final cut operation which separates the workpiece W from the blank B so as to form the workpiece W, the X-position of the torch 24 along the X-guide is controlled for varying the X-position of entrance point I or exit point E relative to the gap 18, in particular to vary the distance of the position of entrance point I or exit point E relative to the downstream gap edge 22.

The advantages of the 3D-cutter and the method according to the invention have been described in the summary section above and are incorporated here by reference thereto. In summary, smaller work pieces W may be produced while keeping the same gap width GW, and/or the gap width GW may be reduced which also has the result that smaller workpieces W may be separated from the blank without falling in the gap 18.

In an embodiment the 3D-cutter, the electronic controller 36 may be configured to, for at least one cut operation, including at least a final cut operation which separates the workpiece W from the blank B so as to form the workpiece W, control the X-position of the torch 24 relative to the gap 18 such that, when the beam direction P is perpendicular to the blank, the exit point E is closer to the downstream gap edge 22 than to the upstream gap edge 20.

An embodiment of the method which corresponds to this embodiment of the 3D-cutter may include that, for at least one cut operation, including at least a final cut operation which separates the workpiece W from the blank B so as to form the workpiece W, the X-position of the torch 24 along the X-guide is controlled relative to the gap 18 such that, when the beam direction P is perpendicular to the blank, the exit point E is closer to the downstream gap edge 22 than to the upstream gap edge 20.

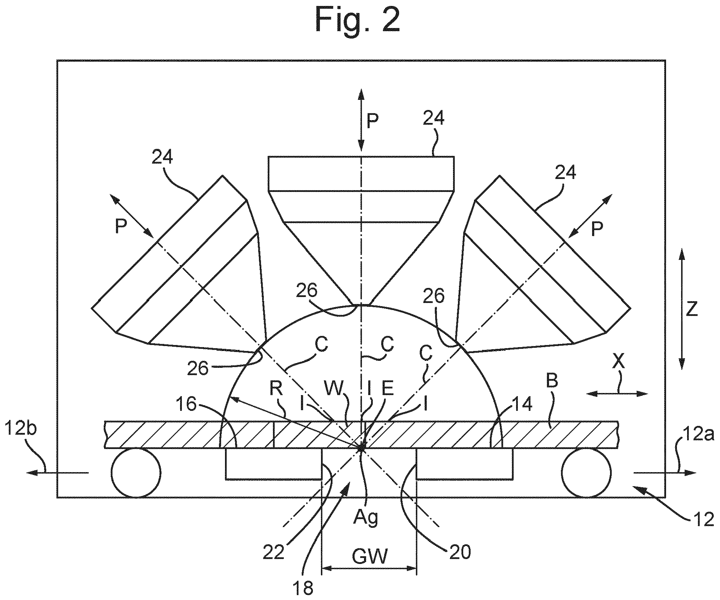

This is clearly visible when Fig. 2 and Fig. 3 are compared. Fig. 3, which is an example of this embodiment, shows that the exit point E of the beam is closer to the downstream gap edge 22 than to the upstream gap edge 20. This is in contrast to the manner in which the known Voortman V325 3D-cutter is operated and in which the exit point E of the beam is always kept in the middle between the upstream gap edge 20 and the downstream gap edge 22 as shown in Fig. 2 which depicts the prior art situation. By virtue of this new way of operating the 3D-cutter, smaller parts may be cut because the cut which is created by the 3D-cutter is closer to the downstream gap edge 22 and a larger part of the workpiece W to be separated from the sheet blank B may be supported by the downstream support surface part 16.

In an embodiment of the 3D-cutter 10, the electronic controller 36 may be configured to, for at least one cut operation, including at least the final cut operation which separates the workpiece W from the blank B so as to form the workpiece W, control the X-position of the torch 24 relative to the gap 18 such that, when the torch 24 is tilted so as to form a beveled cut, the exit point E is closer to the downstream gap edge than to the upstream gap edge.

An embodiment of the method which corresponds to this embodiment of the 3D-cutter may include that for at least one cut operation, including at least the final cut operation which separates the workpiece W from the blank B so as to form the workpiece W, the X-position of the torch 24 along the X-guide is controlled relative to the gap 18 such that, when the torch 24 is tilted as to form a beveled cut, the exit point E is closer to the downstream gap edge 22 than to the upstream gap edge 20.

Again, as with the previous embodiment, this allows to separate smaller workpieces W from the blank B and/or to reduce the gap width GW.

In an embodiment of the 3D-cutter 10, the electronic controller 36 may be configured to, for at least one cut operation, including at least the final cut operation which separates the workpiece W from the blank B so as to form the workpiece W, control the X-position of the torch 24 along the X-guide relative to the gap 18 such that, when the beam direction P produced by the torch 24 is perpendicular to the blank B or when the torch 24 is tilted so as to form a beveled cut, the exit point E is positioned in X-direction relative to the downstream gap edge 22 such that the exit point E is as close as possible to the downstream gap edge without causing damage to the downstream edge 22 caused by heat produced by the beam.

An embodiment of the method which corresponds to this embodiment of the 3D-cutter may include that for at least one cut operation, including at least the final cut operation which separates the workpiece W from the blank B so as to form the workpiece W, the X-position of the torch 24 along the X-guide is controlled relative to the gap 18 such that, when the beam direction P produced by the torch 24 is perpendicular to the blank B or when the torch 24 is tilted so as to form a beveled cut, the exit point E is positioned in X-direction relative to the downstream gap edge 22 such that the exit point E is as close as possible to the downstream gap edge 22 without causing damage to the downstream gap edge 22 caused by heat produced by the beam.

This embodiment is a further optimization of the 3D-cutter and the method according to the invention because when it counts, i.e. when the workpiece W is separated from the blank B, the X-position of the exit point E of the beam is as close as possible to the downstream gap edge 22 without damaging the downstream gap edge 22. Thus, the smallest possible workpiece W can be separated from the blank by virtue of the fact that the workpiece W can be positioned as far as possible on the downstream support surface part 16 of the conveyor. Thus, the center of gravity of the workpiece W can be positioned above this downstream support surface part 16 and falling of the workpiece W in the gap 18 is prevented.

In a further elaboration of the embodiment of the 3D in which the exit point E of the perpendicular beam is closer to the downstream gap edge 22, the electronic controller 36 may configured to, for at least one cut operation, including at least the final cut operation which separates the workpiece W from the blank B so as to form the workpiece W, control the X-position of the torch 24 relative to the gap 18 such that, when the torch 24 is tilted so as to form a beveled cut, the exit point E coincides with the gap axis Ag.

An embodiment of the method which corresponds to this embodiment of the 3D-cutter may include that for at least one cut operation, including at least the final cut operation which separates the workpiece W from the blank B so as to form the workpiece W, the X-position of the torch 24 along the X-guide is controlled relative to the gap 18 such that, when the torch 24 is tilted so as to form a beveled cut, the exit point E coincides with the gap axis Ag.

This embodiment is less optimal than the previously described embodiment, but has the advantage that the control of the motion of the torch 24 and the blank B is less complicated.

In an embodiment of the 3D-cutter 10, the electronic controller 36 may be configured to, for at least one cut operation, including at least the final cut operation which separates the workpiece W from the blank B so as to form the workpiece W, control the X-position of the torch 24 relative to the gap 18 such that, when the beam direction P produced by the torch 24 is perpendicular to the blank B or when the torch 24 is tilted so as to form a beveled cut, the exit point E is at a distance from the downstream gap edge 22 in the range of 15-30 mm, more preferably in the range of 15-25 mm.

An embodiment of the method which corresponds to this embodiment of the 3D-cutter may include that for at least one cut operation, including at least the final cut operation which separates the workpiece W from the blank B so as to form the workpiece W, the X-position of the torch 24 along the X-guide is controlled relative to the gap 18 such that, when the beam direction P produced by the torch 24 is perpendicular to the blank B or when the torch 24 is tilted so as to form a beveled cut, the exit point E is at a distance from the downstream gap edge 22 in the range of 15-30 mm, more preferably in the range of 15-25 mm.

This is an improvement relative to the Voortman V325 3D-cutter and other known 3D-cutters with the same torch power because there the gap width is at least 80 mm so that damage of the upstream gap edge 20 or the downstream gap edge 22 is prevented under all circumstances that is at all possible tilt angles and tilt directions of the torch 24. It is clear however, that such a gap width requires a minimal workpieces length viewed in X-direction which is larger than with the 3D-cutter of the present invention.

In an embodiment, the 3D-cutter may be a 3D-plasma cutter. The torch 24 may have a power corresponding to 500 Ampère and the width GW of the gap 18 may be less than 60 mm, preferably less than 50 mm, more preferably in the range of 30-40 mm. In a more general sense, a power, e.g. a maximum power, of the torch 24 may correspond to 150 kVA.

With such a 3D-cutter, workpieces W may be separated from a blank B which have smaller dimensions viewed in the X-direction than up to present possible with the Voortman V325 3D-cutter and other known 3D-cutter having the same torch power.

In an embodiment of the 3D-cutter 10, the electronic controller may be configured to operate the torch 24 at variable torch power levels P comprising a maximum torch power level Pₘₐₓ and at least one reduced torch power level P_{red}, wherein the electronic controller 36 is configured to, when the torch 24 is operating a maximum torch power level Pₘₐₓ, keep a minimum distance between the exit point E and the downstream gap edge 22 at a value of DMINₘₐₓ, and to, when the torch 24 is operating at the at least one reduced torch power level P_{red}, keep a minimum distance between the exit point E and the downstream gap edge 22 at a value of DMIN_{reduced}, wherein DMIN_{reduced} is smaller than DMINₘₐₓ.

An embodiment of the method which corresponds to this embodiment of the 3D-cutter may include that when the torch 24 is operating a maximum torch power level Pₘₐₓ, a minimum distance is kept between the exit point E and the downstream gap edge 22 having a value of DMINₘₐₓ, wherein, when the torch 24 is operating at the at least one reduced torch power level P_{red}, a minimum distance is kept between the exit point E and the downstream gap edge 22 having a value of DMIN_{reduced}, wherein DMIN_{reduced} is smaller than DMINₘₐₓ.

In this embodiment, not only the tilt direction and tilt angle have influence on the X-position of the exit point E relative to the downstream gap edge 22, but also the actual operating power of the torch 24 which may be varied. For example, when the final cut to separate a workpiece has to be made, the torch power may be reduced so as to make it possible to even further reduce the distance between the exit point E of the beam and the downstream gap edge 22 so that even smaller workpieces W can be separated from the sheet blank B.

In an embodiment of the 3D-cutter 10, of which an example is shown in Fig. 1, the torch 24 may be tiltable by being rotatably mounted around a torch-X-axis Xt which extends parallel to the X-direction and which is offset from the torch tip 26 and by being rotatably mounted around a torch-Y-axis Yt which extends parallel to the Y-direction and which is offset relative to the torch tip 26.

In an embodiment of the 3D-cutter 10, of which an example is shown in Fig. 4, the torch 24 may be tiltable by being rotatably mounted around a torch-Z-axis Zt which extends parallel to the Z-direction and by being rotatably mounted around a horizontal torch-H-axis Ht which is offset relative to the torch-Z-axis Zt and co-rotates with rotation of the torch around the torch-Z-axis.

Although illustrative embodiments of the present invention have been described above, in part with reference to the accompanying drawings, it is to be understood that the invention is not limited to these embodiments. Variations to the disclosed embodiments can be understood and effected by those skilled in the art in practicing the claimed invention, from a study of the drawings, the disclosure, and the appended claims.

Reference throughout this specification to "one embodiment" or "an embodiment" means that a particular feature, structure or characteristic described in connection with the embodiment is included in at least one embodiment of the present invention. Thus, the appearances of the phrases "in one embodiment" or "in an embodiment" in various places throughout this description are not necessarily all referring to the same embodiment.

Furthermore, it is noted that particular features, structures, or characteristics of one or more of the various embodiments which are described above may be used implemented independently from one another and may be combined in any suitable manner to form new, not explicitly described embodiments.

The reference numbers used in the detailed description and the claims do not limit the description of the embodiments nor do they limit the claims. The reference numbers are solely used to clarify.

## Claims

1. Method for controlling a 3D-cutter (10), embodied as a 3D-plasma, 3D-autogene, or 3D-laser cutter, during cutting of a workpiece (W) out of a metal sheet blank (B), wherein the 3D-cutter (10) includes:
- a conveyor (12) defining a support surface (14, 16) having an upstream end (12a) from which the metal sheet blank (B) out of which the workpiece (W) is to be cut is supplied and a downstream end (12b) towards which the cut workpiece (W) is discharged, the conveyor (12) being configured to transport the blank (B) back and forth along a horizontal X-direction of an orthogonal X-, Y-, Z-coordinate system of which the Y-direction is a horizontal direction extending perpendicular to the X-direction and wherein the Z-direction is the vertical direction, wherein the support surface (14, 16) comprises an upstream support surface part (14), a downstream support surface part (16) and a gap (18) separating the upstream support surface part (14) from the downstream support surface part (16), the gap (18) extending in the Y-direction over the entire width of the support surface (14, 16) the gap (18) being bounded on an upstream side by a upstream gap edge (20) and being bounded on a downstream side by a downstream gap edge (22), the gap (18) having a width (GW) which is defined by the distance between the upstream gap edge (20) and the downstream gap edge (22), the gap (18) defining a gap axis (Ag) which extends parallel to and is centrally positioned between the upstream gap edge (20) and the downstream gap edge (22);
- a torch (24) having a torch tip (26) and being connected to a main frame (28) via an X-guide (30) extending in the X-direction, a Y-guide (32) extending in the Y-direction and a Z-guide (34) extending in a Z-direction so as to be movable in the X-direction, the Y-direction and Z-direction relative to the gap (18) in the support surface (14, 16) of the conveyor (12), wherein the torch (24) is tiltable in variable tilt directions and with variable tilt angles relative to a horizontal XY-plane so as to be able to produce 3-dimensionally shaped beveled cuts, wherein the torch (24) is configured to produce a cutting beam (C), e.g. a plasma cutting beam, an autogenic cutting beam or a laser cutting beam, the cutting beam defining a beam direction and creating an entrance point (I) on a top surface of the blank (B) and an exit point (E) on a bottom surface of the blank (B);
- an electronic controller (36) configured for controlling the linear movements of the torch (24) in X-, Y-, and Z-directions as well as the tilt movements of the torch (24), wherein the electronic controller (36) is additionally configured for controlling the conveyor (12) to vary the position of the blank (B) back and forth along the X-direction relative to the gap (18);
the method being **characterized in that** for at least one cut operation, including at least a final cut operation which separates the workpiece (W) from the blank (B) so as to form the workpiece (W), the X-position of the torch (24) along the X-guide is controlled for varying the X-position of entrance point (I) or exit point (E) relative to the gap (18), in particular to vary the distance of the position of entrance point (I) or exit point (E) relative to the downstream gap edge (22).

2. The method according to claim 1, wherein for at least one cut operation, including at least a final cut operation which separates the workpiece (W) from the blank (B) so as to form the workpiece (W), the X-position of the torch (24) along the X-guide is controlled relative to the gap (18) such that, when the beam direction (P) is perpendicular to the blank, the exit point (E) is closer to the downstream gap edge (22) than to the upstream gap edge (20).

3. The method according to any one of claims 1-2, for at least one cut operation, including at least the final cut operation which separates the workpiece (W) from the blank (B) so as to form the workpiece (W), the X-position of the torch (24) along the X-guide is controlled relative to the gap (18) such that, when the torch (24) is tilted as to form a beveled cut, the exit point (E) is closer to the downstream gap edge (22) than to the upstream gap edge (20).

4. The method according to any one of claims 1-3, wherein for at least one cut operation, including at least the final cut operation which separates the workpiece (W) from the blank (B) so as to form the workpiece (W), the X-position of the torch (24) along the X-guide is controlled relative to the gap (18) such that, when the beam direction (P) produced by the torch (24) is perpendicular to the blank (B) or when the torch (24) is tilted so as to form a beveled cut, the exit point (E) is positioned in X-direction relative to the downstream gap edge such that the exit point is as close as possible to the downstream gap edge (22) without causing damage to the downstream gap edge (22) caused by heat produced by the beam.

5. The method according to claim 2, for at least one cut operation, including at least the final cut operation which separates the workpiece (W) from the blank (B) so as to form the workpiece (W), the X-position of the torch (24) along the X-guide is controlled relative to the gap (18) such that, when the torch (24) is tilted so as to form a beveled cut, the exit point (E) coincides with the gap axis (Ag).

6. The method according to any one of claims 1-5, wherein for at least one cut operation, including at least the final cut operation which separates the workpiece (W) from the blank (B) so as to form the workpiece (W), the X-position of the torch (24) along the X-guide is controlled relative to the gap (18) such that, when the beam direction (P) produced by the torch (24) is perpendicular to the blank (B) or when the torch (24) is tilted so as to form a beveled cut, the exit point (E) is at a distance from the downstream gap edge (22) in the range of 15-30 mm, more preferably in the range of 15-25 mm.

7. The method according to any one of the preceding claims, wherein the torch (24) is operable at variable torch power levels (P) comprising a maximum torch power level (Pₘₐₓ) and at least one reduced torch power level (P_{red}), wherein, when the torch (24) is operating a maximum torch power level (Pₘₐₓ), a minimum distance is kept between the exit point (E) and the downstream gap edge (22) having a value of DMINₘₐₓ, wherein, when the torch (24) is operating at the at least one reduced torch power level (P_{red}), a minimum distance is kept between the exit point (E) and the downstream gap edge (22) having a value of DMIN_{reduced}, wherein DMIN_{reduced} is smaller than DMINₘₐₓ.

8. A 3D-cutter (10) embodied as a 3D-plasma, 3D-autogeen, or 3D-laser cutter, the 3D-cutter (10) comprising:
- a conveyor (12) defining a support surface (14, 16) having an upstream end (12a) from which a metal sheet blank (B) out of which the workpiece (W) is to be cut is supplied and a downstream end (12b) towards which the cut workpiece (W) is discharged, the conveyor (12) being configured to transport the blank (B) back and forth along a horizontal X-direction of an orthogonal X-, Y-, Z-coordinate system of which the Y-direction is a horizontal direction extending perpendicular to the X-direction and wherein the Z-direction is the vertical direction, wherein the support surface (14, 16) comprises an upstream support surface part (14), a downstream support surface part (16) and a gap (18) separating the upstream support surface part (14) from the downstream support surface part (16), the gap (18) extending in the Y-direction over the entire width of the support surface (14, 16) the gap (18) being bounded on an upstream side by a upstream gap edge (20) and being bounded on a downstream side by a downstream gap edge (22), the gap (18) having a width (GW) which is defined by the distance between the upstream gap edge (20) and the downstream gap edge (22), the gap (18) defining a gap axis (Ag) which extends parallel to and is centrally positioned between the upstream gap edge (20) and the downstream gap edge (22);
- a torch (24) having a torch tip (26) and being connected to a main frame (28) via an X-guide (30) extending in the X-direction, a Y-guide (32) extending in the Y-direction and a Z-guide (34) extending in a Z-direction so as to be movable in the X-direction, the Y-direction and Z-direction relative to the gap (18) in the support surface (14, 16) of the conveyor (12), wherein the torch (24) is tiltable in variable tilt directions and with variable tilt angles relative to a horizontal XY-plane so as to be able to produce 3-dimensionally shaped beveled cuts, wherein the torch (24) is configured to produce a cutting beam (C), e.g. a plasma cutting beam, an autogenic cutting beam or a laser cutting beam, the cutting beam defining a beam direction and creating an entrance point (I) on a top surface of the blank (B) and an exit point (E) on a bottom surface of the blank (B);
- an electronic controller (36) configured for controlling the linear movements of the torch (24) in X-, Y-, and Z-directions as well as the tilt movements of the torch (24), wherein the electronic controller (36) is additionally configured for controlling the conveyor (12) to vary the position of the blank (B) back and forth along the X-direction relative to the gap (18); **characterized in that** the electronic controller (36) is configured to, for at least one cut operation, including at least a final cut operation which separates the workpiece (W) from the blank (B) so as to form the workpiece (W), control the X-position of the torch (24) along the X-guide for varying the X-position of entrance point (I) or exit point (E) relative to the gap (18), in particular to vary the distance of the position of entrance point (I) or exit point (E) relative to the downstream gap edge (22).

9. The 3D-cutter (10) according to claim 8, wherein the electronic controller (36) is configured to, for at least one cut operation, including at least a final cut operation which separates the workpiece (W) from the blank (B) so as to form the workpiece (W), control the X-position of the torch (24) relative to the gap (18) such that, when the beam direction (P) is perpendicular to the blank, the exit point (E) is closer to the downstream gap edge (22) than to the upstream gap edge (20).

10. The 3D-cutter (10) according to claim 9, wherein the electronic controller (36) is configured to, for at least one cut operation, including at least the final cut operation which separates the workpiece (W) from the blank (B) so as to form the workpiece (W), control the X-position of the torch (24) relative to the gap (18) such that, when the torch (24) is tilted so as to form a beveled cut, the exit point (E) is closer to the downstream gap edge than to the upstream gap edge

11. The 3D-cutter (10) according to any one of claims 8-10, wherein the electronic controller (36) is configured to, for at least one cut operation, including at least the final cut operation which separates the workpiece (W) from the blank (B) so as to form the workpiece (W), control the X-position of the torch (24) along the X-guide is controlled relative to the gap (18) such that, when the beam direction (P) produced by the torch (24) is perpendicular to the blank (B) or when the torch (24) is tilted so as to form a beveled cut, the exit point (E) is positioned in X-direction relative to the downstream gap edge such that the exit point is as close as possible to the downstream gap edge (22) without causing damage to the downstream gap edge (22) caused by heat produced by the beam.

12. The 3D-cutter (10) according to claim 9, wherein the electronic controller (36) is configured to, for at least one cut operation, including at least the final cut operation which separates the workpiece (W) from the blank (B) so as to form the workpiece (W), control the X-position of the torch (24) relative to the gap (18) such that, when the torch (24) is tilted so as to form a beveled cut, the exit point (E) coincides with the gap axis (Ag).

13. The 3D-cutter (10) according to any one of claims 8-12, wherein the electronic controller (36) is configured to, for at least one cut operation, including at least the final cut operation which separates the workpiece (W) from the blank (B) so as to form the workpiece (W), control the X-position of the torch (24) relative to the gap (18) such that, when the beam direction (P) produced by the torch (24) is perpendicular to the blank (B) or when the torch (24) is tilted so as to form a beveled cut, the exit point (E) is at a distance from the downstream gap edge (22) in the range of 15-30 mm, more preferably in the range of 15-25 mm.

14. The 3D-cutter (10) according to any one of claims 8-13, wherein the 3D-cutter is a 3D-plasma cutter, wherein the torch (24) has a power corresponding to 500 Ampère, and wherein the width (GW) of the gap (18) is less than 60 mm, preferably less than 50 mm, more preferably in the range of 30-40 mm.

15. The 3D-cutter (10) according to any one of claims 8-14, wherein the electronic controller is configured to operate the torch (24) at variable torch power levels (P) comprising a maximum torch power level (Pₘₐₓ) and at least one reduced torch power level (P_{red}), wherein the electronic controller (36) is configured to, when the torch (24) is operating a maximum torch power level (Pₘₐₓ), keep a minimum distance between the exit point (E) and the downstream gap edge (22) at a value of DMINₘₐₓ, and to, when the torch (24) is operating at the at least one reduced torch power level (P_{red}), keep a minimum distance between the exit point (E) and the downstream gap edge (22) at a value of DMIN_{reduced}, wherein DMIN_{reduced} is smaller than DMINₘₐₓ.

16. The 3D-cutter (10) according to any one of claims 8-15, wherein the torch (24) is tiltable by being rotatably mounted around a torch-X-axis (Xt) which extends parallel to the X-direction and which is offset from the torch tip (26) and by being rotatably mounted around a torch-Y-axis (Yt) which extends parallel to the Y-direction and which is offset relative to the torch tip (26).

17. The 3D-cutter (10) according to any one of claims 8-15, wherein the torch (24) is tiltable by being rotatably mounted around a torch-Z-axis (Zt) which extends parallel to the Z-direction and by being rotatably mounted around a horizontal torch-H-axis (Ht) which is offset relative to the torch-Z-axis (Zt) and co-rotates with rotation of the torch around the torch-Z-axis.
